# EUROPEAN PATENT SPECIFICATION

(11) **EP 3 214 821 B1**
(45) Date of publication and mention of the grant of the patent: **06.11.2019**
(21) Application number: 17158411.3
(22) Date of filing: 28.02.2017
(51) Int. Cl.: H04N 21/234, H04N 21/81, H04L 29/06

(54) **DETERMINING ADVERTISEMENT LOCATIONS BASED ON CUSTOMER INTERACTION**
BESTIMMUNG VON WERBUNGSPLATZIERUNGEN BASIEREND AUF KUNDENINTERAKTION
DÉTERMINATION D'EMPLACEMENTS PUBLICITAIRES BASÉE SUR L'INTERACTION AVEC DES CLIENTS

(30) Priority: 01.03.2016 US 201615057824
(43) Date of publication of application: 06.09.2017
(73) Proprietor: Comcast Cable Communications LLC, Philadelphia, Pennsylvania 19103 (US)
(72) Inventor: Neumann, Jan, Philadelphia, PA 19103 (US)
(74) Representative: V.O.

(56) References cited:
- US-A1- 2004 034 874
- US-A1- 2006 041 902
- US-A1- 2008 040 740
- US-A1- 2010 158 470
- US-A1- 2013 205 326

## Description

### BACKGROUND

Consumers have an ever-increasing demand for higher quality media content experiences. Consumers wish to view their content, which may be time-delayed, without interruptions by commercials. This demands more efficient and reliable methods for determining information about the media content. Content providers may wish to identify advertisement locations in order to modify recorded content or better predict advertisement placement opportunities in linear or time shifted content. Thus, this disclosure identifies and addresses ever-present needs for more efficient and accurate ways to determine advertisement boundaries for a content item.

US2013/0205326 discloses a method comprising in a media device that is operable to play video content: receiving user interaction with the media device, wherein the user interaction causes the initiation of a feature that affects video content that plays on the media device; receiving one or more interactive events from a content recognition system in response to the user interaction; and executing the one or more interactive events to: affect video content that is playing on the media device; and display one or more overlay windows corresponding to the affected video content.

US2006/0041902 discloses a system in which program boundaries are determined through viewing behavior.

### SUMMARY

The present invention is defined by a method according to claim 1, one or more computing devices according to claim 13 and a system according to claim 14. Further embodiments are defined by the dependent claims. Various features described herein may provide a method for determining the locations of advertisements in a content item, such as commercial breaks, based on user interactions associated with the content item. Users often will tune out of a content item, fast forward, turn down the volume, pause, or take various other actions when presented with an advertisement. By analyzing such user interactions, a system may accurately depict the points at which advertisements begin and end.

A system may determine the location of advertisements and advertisement placement opportunities by determining scene changes within a content item. The system may determine the level of user interaction that occurs at the scene change. For example, a rapid increase in the number of users that tune out at a scene change indicates that the scene change likely corresponds to a transition from a show and into an advertisement. By analyzing multiple factors according to weights corresponding to the type of content item being analyzed (such as weights specific to comedies), the system may determine if a threshold is met, indicating the beginning or end of an advertisement. Once advertisement placement opportunities are determined, data may be acted upon by the system, or provided to advertisement insertion platforms, to insert advertisements or determine directed advertisements.

These features in the summary above are merely illustrative of the features described in greater detail below, and they are not intended to recite the only novel features or critical features in the claims.

### BRIEF DESCRIPTION OF THE DRAWINGS

Some features herein are illustrated by way of example, and not by way of limitation, in the accompanying drawings. In the drawings, like numerals reference similar elements between the drawings.
FIG. 1 illustrates an example information distribution network.
FIG. 2 illustrates general hardware elements of an example computing device.
FIG. 3 illustrates an example of user interactions corresponding to a content item.
FIG. 4 illustrates an example screen depicting additional factors that may assist in determining whether a portion of content is an advertisement.
FIG. 5 illustrates example rule data for a content item.
FIG. 6 illustrates an example method for determining the location of advertisements based on user interactions.

### DETAILED DESCRIPTION

According to some aspects described herein, a system may determine the location of one or more advertisements in a content item based on analyzing consumer interactions and other factors at various times corresponding to the content item. Users react to advertisements in different ways. For example, users often will change the channel or turn down the volume for live content, or fast-forward through time-delayed content. This information may present an accurate and efficient means for determining the boundaries for advertisements that are interspersed among a content item using one of the methods described herein.

In the following description of various illustrative embodiments, reference is made to the accompanying drawings, which form a part hereof, and in which is shown, by way of illustration, various embodiments in which aspects of the disclosure may be practiced. It is to be understood that other embodiments may be utilized, and structural and functional modifications may be made, without departing from the scope of the present disclosure.

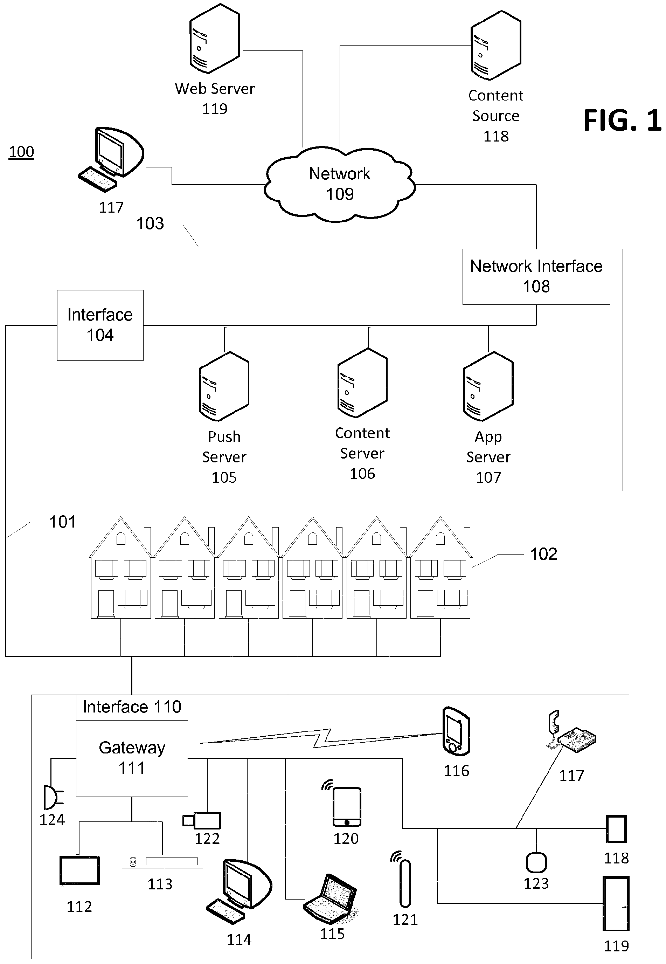

FIG. 1 illustrates an example information distribution network 100 in which many of the various features described herein may be implemented. The information distribution network 100 may be any type of information distribution network, such as satellite, telephone, cellular, wireless, etc. One example may be a wireless network, an optical fiber network, a coaxial cable network, or a hybrid fiber/coax (HFC) distribution network. Such networks use a series of interconnected communication links 101 (e.g., coaxial cables, optical fibers, wireless, etc.) to connect multiple premises 102 (e.g., businesses, homes, consumer dwellings, etc.) to a local office 103 (e.g., a headend, a processing facility, etc.). The local office 103 may transmit downstream information signals onto the links 101, and each premises 102 may have a receiver used to receive and process those signals.

There may be one link 101 originating from the local office 103, and it may be split a number of times to distribute the signal to various premises 102 in the vicinity (which may be many miles) of the local office 103. The links 101 may include components not illustrated, such as splitters, filters, amplifiers, etc. to help convey the signal clearly. Portions of the links 101 may also be implemented with fiber-optic cable, while other portions may be implemented with coaxial cable, other lines, or wireless communication paths.

The local office 103 may include an interface 104, such as a cable modem termination system (CMTS) in an example of an HFC-type network, which may be a computing device configured to manage communications between devices on the network of links 101 and backend devices such as servers 105-107 (to be discussed further below). In the example of an HFC-type network, the TS may be as specified in a standard, such as the Data Over Cable Service Interface Specification (DOCSIS) standard, published by Cable Television Laboratories, Inc. (a.k.a. CableLabs), or it may be a similar or modified device instead. The TS may be configured to place data on one or more downstream frequencies to be received by modems at the various premises 102, and to receive upstream communications from those modems on one or more upstream frequencies. The local office 103 may also include one or more network interfaces 108, which can permit the local office 103 to communicate with various other external networks 109. These networks 109 may include, for example, Internet Protocol (IP) networking devices, telephone networks, cellular telephone networks, fiber optic networks, local wireless networks (e.g., WiMAX), satellite networks, and any other desired network, and the interface 108 may include the corresponding circuitry needed to communicate on the network 109, and to other devices on the network such as a cellular telephone network, its corresponding cell phones, web server 119, and/or content source 118.

As noted above, the local office 103 may include a variety of servers 105-107 that may be configured to perform various functions. For example, the local office 103 may include a push notification server 105. The push notification server 105 may generate push notifications to deliver data and/or commands to the various premises 102 in the network (or more specifically, to the devices in the premises 102 that are configured to detect such notifications). The local office 103 may also include a content server 106. The content server 106 may be one or more computing devices that are configured to provide content to users in homes. This content may be, for example, video on demand, television programs, songs, services, information, text listings, etc. The content server 106 may include software to validate (or initiate the validation of) user identities and entitlements, locate and retrieve (or initiate the locating and retrieval of) requested content, encrypt the content, and initiate delivery (e.g., streaming, transmitting via a series of content fragments) of the content to the requesting user and/or device. The content server 106 may also receive information regarding user interactions, such as data indicating user interactions of live or recorded content.

The local office 103 may also include one or more application servers 107. An application server 107 may be a computing device configured to offer any desired service, and may run various languages and operating systems (e.g., servlets and JSP pages running on Tomcat/MySQL, OSX, BSD, Ubuntu, Redhat, HTML5, JavaScript, AJAX and COMET). For example, an application server may be responsible for collecting television program listings information and generating a data download for electronic program guide listings. Another application server may be responsible for monitoring user viewing habits and collecting that information for use in selecting advertisements. Another application server may be responsible for formatting and inserting advertisements in a video stream and/or content item being transmitted to the premises 102.

An example premises 102a may include an interface 110 (such as a modem, or another receiver and/or transmitter device suitable for a particular network), which may include transmitters and receivers used to communicate on the links 101 and with the local office 103. The interface 110 may be, for example, a coaxial cable modem (for coaxial cable lines 101), a fiber interface node (for fiber optic lines 101), or any other desired modem device. The interface 110 may be connected to, or be a part of, a gateway interface device 111. The gateway interface device 111 may be a computing device that communicates with the interface 110 to allow one or more other devices in the home to communicate with the local office 103 and other devices beyond the local office. The gateway 111 may be a set-top box (STB), digital video recorder (DVR), computer server, and/or any other desired computing device. The gateway 111 may also include (not shown) local network interfaces to provide communication signals to other devices in the home (e.g., user devices), such as televisions 112, additional STBs 113, personal computers 114, laptop computers 115, wireless devices 116 (wireless laptops, tablets and netbooks, mobile phones, mobile televisions, personal digital assistants (PDA), etc.), telephones 117, window security sensors 118, door home security sensors 119, tablet computers 120, personal activity sensors 121, video cameras 122, motion detectors 123, microphones 124, and/or any other desired computers, sensors, and/or other devices. Examples of the local network interfaces may include Multimedia Over Coax Alliance (MoCA) interfaces, Ethernet interfaces, universal serial bus (USB) interfaces, wireless interfaces (e.g., IEEE 802.11), Bluetooth interfaces, and/or others.

As used herein, when one computing device instructs a different computing device to perform one or more operations, the computing device may send one or more instructions with one or more parameters for the operations to the different computing device, which may execute the one or more instructions with the one or more parameters to perform the instructed operations.

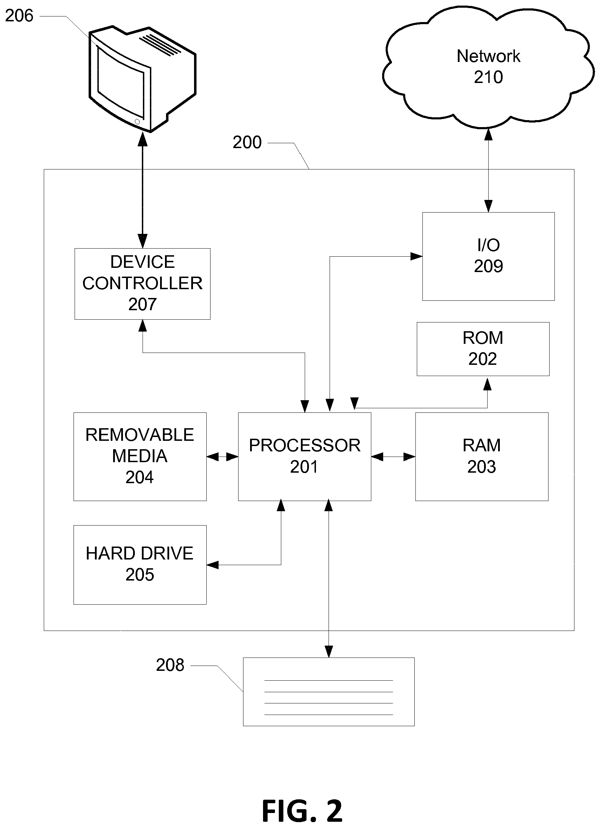

FIG. 2 illustrates general hardware elements of an example computing device 200 that can be used to implement any of the elements discussed herein and/or illustrated in the figures. The computing device 200 may include one or more processors 201, which may execute instructions of a computer program to perform any of the features described herein. The instructions to configure the operation of the processor 201 may be stored in any type of computer-readable medium or memory. For example, instructions may be stored in a read-only memory (ROM) 202, a random access memory (RAM) 203, a removable media 204, such as a Universal Serial Bus (USB) drive, compact disk (CD) or digital versatile disk (DVD), floppy disk drive, and/or any other desired electronic storage medium. Instructions may also be stored in an attached (or internal) storage 205 (e.g., hard drive, flash, etc.). The computing device 200 may include one or more output devices, such as a display 206 (or an external television), and may include one or more output device controllers 207, such as a video processor. There may also be one or more user input devices 208, such as a remote control, keyboard, mouse, touch screen, microphone, camera, etc. The computing device 200 may also include one or more network interfaces such as an interface 209 (such as a network card), to communicate with a network 210. The network interface may be a wired interface, wireless interface, or a combination of the two. The interface 209 may include a modem (e.g., a cable modem), and the network 210 may include the communication links 101 discussed above; the external network 109; an in-home network; a provider's wireless, coaxial, fiber, or hybrid fiber/coaxial distribution system (e.g., a DOCSIS network); and/or any other desired network.

The FIG. 2 example is an example hardware configuration. Modifications may be made to add, remove, combine, divide, or otherwise alter the components as desired. Additionally, the components illustrated may be implemented using basic computing devices and components, and the same components (e.g., processor 201, ROM 202, etc.) may be used to implement any of the other computing devices and components described herein. For example, the various components herein may be implemented using computing devices having components such as a processor executing computer-executable instructions stored on a computer-readable medium, as illustrated in FIG. 2.

One or more aspects of the disclosure may be embodied in computer-usable data and/or computer-executable instructions, such as in one or more program modules, and executed by one or more computers (such as computing device 200) or other devices to perform any of the functions described herein. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired in various embodiments. In addition, the functionality may be embodied in whole or in part in firmware or hardware equivalents such as integrated circuits, field programmable gate arrays (FPGA), and the like. Example data structures may be used to illustrate one or more aspects described herein, but these are merely illustrative examples.

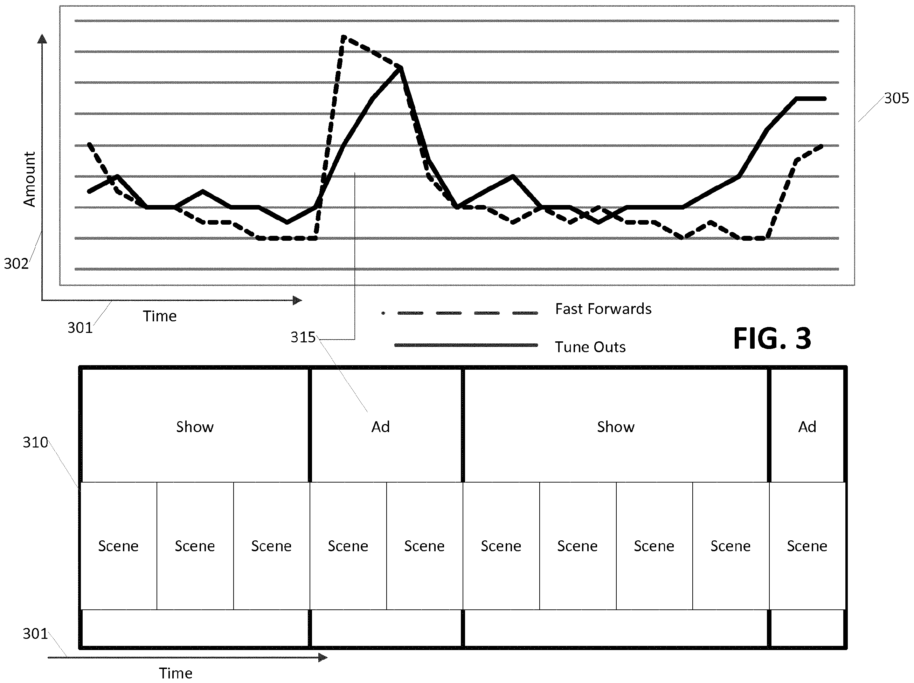

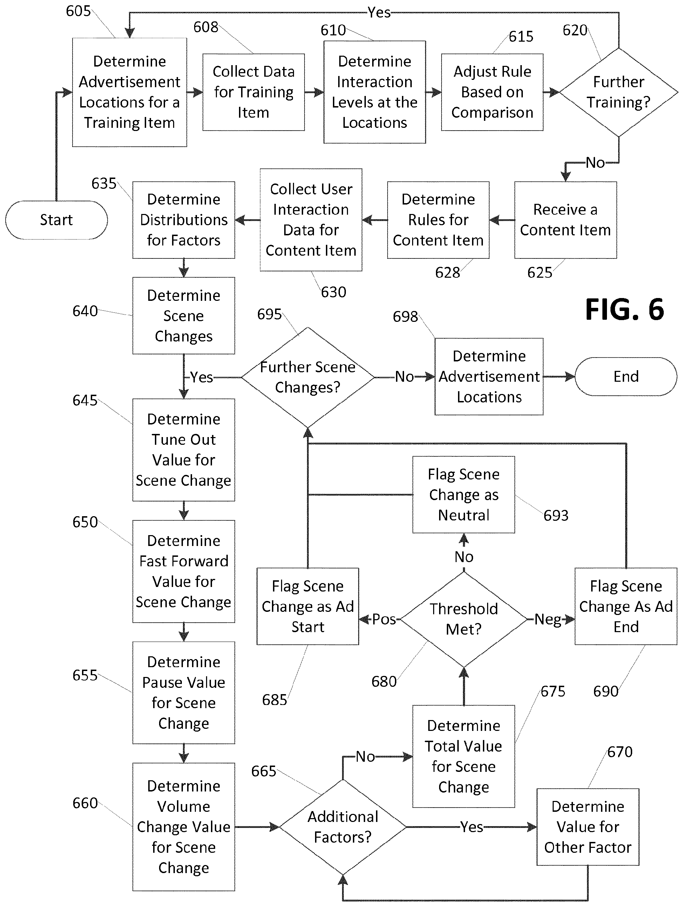

FIG. 3 illustrates an example of user interactions corresponding to a content item. Graph 305 represents am amount 302 of how many users are fast forwarding or tuning in and out of a content item at given points in time 301 aligned in time 301 with a content item 310. A content item may be any type of content, such as a situational comedy (sitcom), action program, comedy program, drama program, and/or a sporting event, and may be transmitted in any suitable or desirable manner. The content item may also have one or more advertisements (e.g., commercials) interspersed throughout the content item, e.g., between different parts of a show. The content item 310 may be organized into one or more scenes. The scenes may be determined by analyzing the content of the media item to determine content that goes together. For example, a show may contain multiple scenes set in different rooms. Using visual analysis, a system may determine that certain frames of a given show share visual characteristics, and group the similar frames into a scene. Further, at the first commercial break, the visual content may change at the transition to a commercial, indicating a different scene. Thus, some scenes may correspond to an advertisement. Transitions between scenes (scene changes) may present points at which advertisements may likely begin or end. Analyzing scenes and scene changes may help identify which scene changes correspond to scene transitions within a show, and which scene changes correspond to scene transitions into, out of, and between advertisements. For example, data representing times at which scene changes occur may be used by a system such as depicted in FIG. 6 in order to assist in establishing when advertisements begin or end.

User interactions may correspond to the scene changes between the show and the advertisements. For example, at point 315, the content item may transition from the show to the advertisements. When this occurs, many users may take some action to avoid watching the advertisements. For example, users may begin tuning out of the transmission (e.g., a "tune out"), such as by changing from a channel corresponding to the transmission to another channel. Also, many users watching the content via time-delay may fast forward the content to skip past the advertisements. This is reflected in the graph 305. When the content item transitions to the ad at point 315, many users who are watching the content live will switch to other content (such as by changing to another television station). Thus, those users enter a "tune out" state, and the number of users in the tune out state may continue to increase as more and more users change the channel. As the advertisement period reaches its conclusion, users will begin to "tune in" to the content in order to continue watching the show. While many users may tune back in before the show has resumed, they may see that the content is still showing advertisements, and tune out again. In the aggregate, this may be reflected in a sharp decrease in tune out events only when the show has resumed or is about to resume.

Fast forwarding events may also demonstrate the boundaries of an advertisement in a content item. When a user watches time-delayed content, the user may begin fast forwarding when he or she encounters an advertisement. When the user notices that the advertisements have ceased and the show resumed, the user may cease fast forwarding. The increase and subsequent decrease may present a spike in fast forwarding events, such as that depicted at point 315.

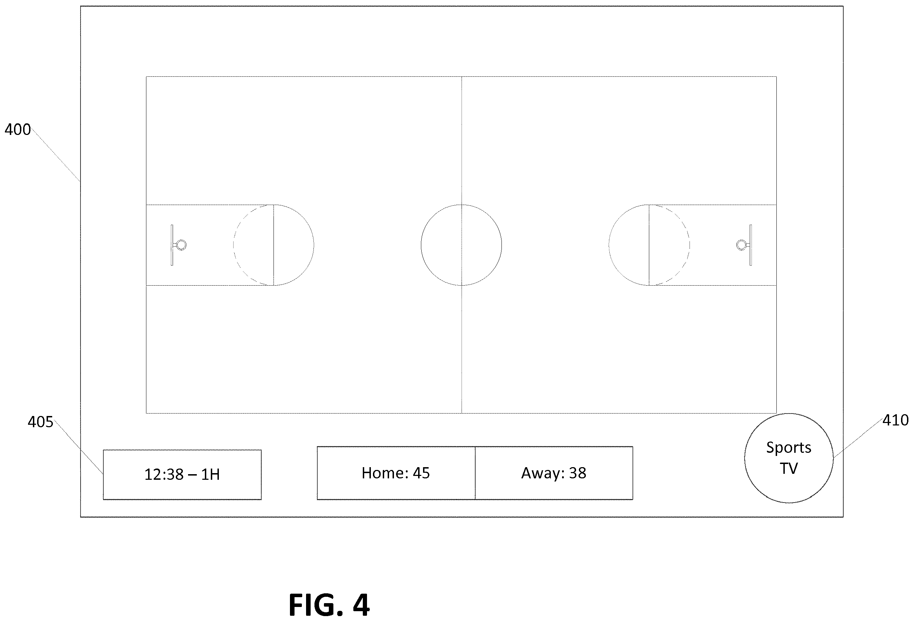

FIG. 4 illustrates an example screen depicting additional factors that may assist in determining whether a portion of content is an advertisement. By combining these additional factors with other factors discussed herein, a system may more accurately determine whether a scene is an advertisement. As one example, a scene 400 may depict a basketball game. The scene may also depict a game clock 405 and a logo 410.

The game clock 405 may indicate that the current scene is a show and not an advertisement. When the game is ongoing, the game clock may be displayed on a screen. When the content changes to an advertisement, the game clock may no longer be displayed. This may mean that there is a strong correlation between the presence of a game clock and whether the scene is of a show. The game clock may also provide contextual information to assist in making a determination of whether the scene is an advertisement. For example, a sporting event broadcast may typically go to a commercial break following a quarter or half. Thus, a transition from a clock winding down, such as one reading "0:00," to a scene change may be indicative of an advertisement.

Logic, such as clock detection logic, may be preloaded or learned. In some instances, the system may be preconfigured to detect the presence of a game clock. For example, the system may be configured to detect the presence of a variety of known logos. In other instances, image detection may be learned. The system may automatically detect that a shape and/or set of numbers appears on the screen, and determine that the shape is a logo and/or the set of numbers is a clock. For example, the system may detect a tree watermark in numerous scenes, and automatically determine that the tree watermark is a logo.

Genre information may assist in the determination of whether a scene relates to a particular portion of a content item, such as the primary content or an advertisement. Different genres may have different characteristics and user behaviors. For example, a game clock 405 may typically only be seen during a sporting event. If the content item is not a sporting event, then a system may reduce the value of the presence of a clock on screen, as it is less likely to be related to the show (for example, an advertisement may include a game clock or a countdown timer for a sale). Further, user behavior may differ based on the genre. For example, when watching a recorded sporting event, users may often fast forward through a portion of the event that is less interesting. Thus, fast forward events may have a lower correlation with the location of an advertisement. As another example, users may frequently tune out and tune back in to a sporting event due to commercial breaks. Thus, tune outs may have a higher correlation with the location of an advertisement in sporting events.

Other on-screen information may indicate that a scene may or may not be an advertisement. A logo 410 may only be shown during a show and may be removed for most advertisements. The presence of the logo may thus indicate that the scene is more likely to be a show. Numerous other factors may be used, such as the presence of a phone number on screen or pricing information.

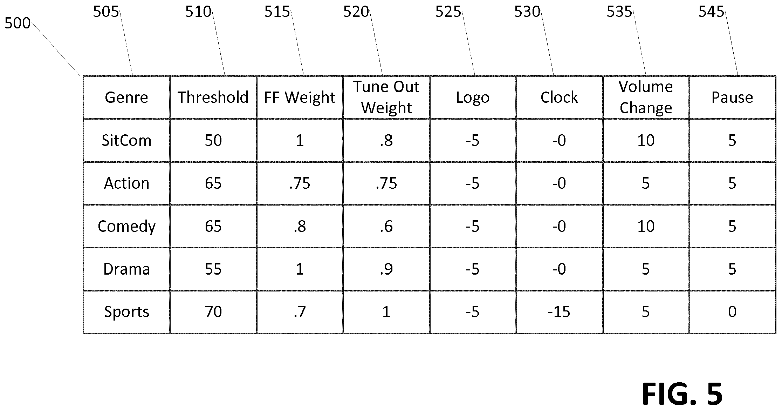

FIG. 5 illustrates example rule data for a content item. A rule 500 may comprise a number of different variables for use by the system in determining whether a scene is an advertisement. There may be a different variable for each genre 505. For example, users may be more likely to randomly tune out of a comedy program than a sports broadcast, so tune outs may be weighted more heavily for a sports genre than a comedy genre. The weights may be configured by a user and/or configured by training the system with a content item (further discussion of training the system with a content item may be found in FIG. 6). The weights depicted in FIG. 5 are merely some examples of the way that weights may be configured, and they may vary based on the implementation and/or over time.

A threshold 510 may establish the total value needed to establish that a scene corresponds to an advertisement. In some instances, user interactions may be more random, and so a lower correlation is needed. For example, users may tend to interact less with a drama program than an action program, so the threshold needed to determine an advertisement beginning or ending for a drama program may be lower than an action program. Further discussion of thresholds may be found in FIG. 6 and associated discussion.

A fast forward weight 515 may indicate the weights given to fast forwarding for different genres for calculating a total value to compare against the threshold 510. The weights may correspond to the likelihood that the fast forwarding corresponds to an advertisement. For example, users may be more likely to fast forward through a boring segment of an action show, but they may rarely fast forward through a segment of a drama. In some instances, rewinding may be used in place of or in addition to fast forwarding as described herein. Further discussion of fast forward values may be found in FIG. 6 and accompanying description.

A tune out weight 520 may indicate the weight given to tune outs for different genres for calculating a total value to compare against the threshold 510. The weights may correspond to the likelihood that the tune outs correspond to an advertisement. For example, users may frequently tune out at the beginning or end of a set of advertisements for a sporting event, but they may tune out randomly for a comedy. Further discussion of fast tune out values may be found in FIG. 6.

A logo weight 525 may indicate the weight given to logos for different genres for calculating a total value to compare against the threshold 510. A logo may be a simple indicator that a section is not an advertisement. Thus, the presence of a logo may reduce the total value that is compared against the threshold. Further discussion of logos may be found in FIG. 4 and FIG. 6.

A clock weight 530 may indicate the weight given to the presence of a clock for calculating a total value to compare against the threshold 510. A game clock may be a simple indicator that a section is not an advertisement. Thus, the presence of a game clock may reduce the total value that is compared against the threshold for content where a game clock is normally displayed (such as sporting events). Further discussion of game clocks may be found in FIG. 4 and FIG. 6.

A volume change weight 535 may indicate the weight given to volume change events for calculating a total value to compare against the threshold 510. The weights may correspond to the likelihood that the volume changing corresponds to an advertisement. For example, many users may turn down the volume when a show transitions into a commercial. Thus, a high number of commands to reduce the volume may indicate that advertisements have begun. Further, a high number of commands to increase the volume may indicate that advertisements have ended. Volume change commands may also vary per genre. For example, in genres such as sitcoms or comedies, users may rarely change volume in shows that have an even volume level, which may provide a stronger correlation between volume changes and advertisements. In genres where volume may increase or decrease suddenly as part of the show, such as an action movie, there may be a greater chance that the volume change is unrelated to an advertisement, and so the correlation may be lower. Further discussion of volume change values may be found in FIG. 6.

A pause weight 545 may indicate the weight given to pause events for calculating a total value to compare against the threshold 510. The weights may correspond to the likelihood that the pause events correspond to an advertisement. For example, a user may often pause prior to commercial breaks in most programs. However, a user may pause a live sporting event at any time-such as pausing so that he or she may go to the bathroom without missing a part of the game-so a pause during a sporting event may have a lower correlation compared to other pauses. Thus, a higher number of pause events may have a correlation with advertisements. Further discussion of pause values may be found in FIG. 6.

FIG. 6 illustrates an example method for determining the location of advertisements based on user interactions. Initial steps may be taken to train a system to optimize rules for determining the location of advertisements for a genre or type of media content. This training may be performed on and by the system, and/or it may be performed elsewhere and the relevant data be uploaded for use by the system. Thus, steps 605-620 may be performed independently or along with steps 625-698. At step 605, a system (such as a computing device 200) may determine advertisement locations for a training item, which may be based on known advertisement locations using metadata or human input. For example, a user may examine a sporting event and flag the beginning and end of every section of advertisements for the duration of the sporting event. The system may also determine what the content type may be for the training item. For example, metadata may flag the content item as a sporting event, or a user may manually flag the content item as a drama.

At step 608, the system may collect data for the training item. The data may comprise user interaction data and other data that may be used to determine whether a portion of a content item is an advertisement. The user interaction data may be data collected from one or more sources, such as a STB, a display device connected to a network such as an the Internet , etc., as would be collected for a content item in step 630. Using the collected data, the system may determine in step 610 what the levels are for the collected data corresponding to the locations of advertisements that were determined in step 605.

In step 610, the system may determine the correlation between interaction levels and the locations of advertisements in the training item. The system may compare different factors against the known beginning and end of the advertisements in order to determine which interactions to weight more or less heavily. In some instances, the system may determine a tune out value for the beginning of advertisement sections using a method such as is described in step 645 and a fast forward value for the beginning of the advertisement sections using a method such as is described in step 650. For example, the system may determine that the beginning of the advertisement sections for the training item has a high tune out value of 30 but a low fast forward value of 10. Further, the system may determine that the end of the advertisements has a tune out value of -42, but a fast forward value of -3.

In step 615, the system may adjust one or more rules based on the comparison. The rule may be specific to a genre, a sub-genre, time of day, channel, and/or any other delineation applicable to the collected data and the training item. For example, the system may determine tune out and fast forward values for a train item as above. The training item may be a comedy (as flagged determined in step 605), and so the system may more heavily weight tune outs for comedies relative to fast forwards, because the tune outs were more indicative of the beginning and end of a section of advertisements.

In step 620, the system may determine whether further training is desired. The system may repeat steps 605-615 by using different content items, different genres, different interactions, and/or any other variation that may be useful. Steps 605-615 may also be repeated on other systems, and the resultant data shared. This may occur at any time, and may be independent of any other steps. Further training may have the advantage of establishing different rules delineated to particular types of content items, and may further have the advantage of refining those rules based on reiterating the training steps for each of the multiple types of content items and/or user interactions. Once training has concluded, the system may proceed to receiving a content item in step 625.

In step 625, the system may receive a content item for which the system is to determine the location of advertisements within the content item. Alternatively, the system may, without receiving the content item, access data needed to perform the required analysis, such as content identification and user interaction data. The system may determine one or more rules for the content item in step 628. The rules determined in step 628 may be determined based on the genre of the content item, the sub-genre of the content item, the time of day when the content item was viewed, the channel the content item appeared on, and/or any other delineation as may be used to determine a rule. The content item may be retrieved from a server, such as a content server 106, and may have associated user interaction data.

In step 630, the system may collect user interaction data for the content item. The user interaction data may be the number of each user event that occurs for each point in time over the duration of the content item. The user events may be associated with events associated with user interactions with a content item presented to one or more users. For example, the system may collect the number of users that are fast forwarding a content item at each 2 second interval for the duration of the content item. The user interaction data may be data collected for the content item as it is watched in real time, using delayed collection from remote devices (such information gathered at one or more STBs 113), using digital tracking information (such as web cookies), and/or any other suitable form for collecting user data. For example, a STB may track instances when the channel is changed, when fast forwards occur, when content is paused, when the volume changes, and/or other user interactions. Collected information may be aggregated at a server, such as a content server 106, for later analysis using one or more methods such as those described herein.

In some instances, user interaction data for only a certain group of users may be used. For example, the system may examine user interaction data for geographic based groups, age based groups, social media based groups, groups based on when the content item is viewed, or any other grouping that may provide useful information. In some instances, the different groups may be processed separately. In other instances, multiple groups may be processed at the same time, and the system may note determined information separately for each group (for example, group A fast-forwards at time X, and group B fast-forwards at time Y). Some groups of users may be better suited to determining advertisement locations than others, so data from some groups may be considered more strongly than data from other groups. For example, younger viewers may tend to tune out randomly, while older viewers may tend to tune out only for advertisements. In this example, tune outs from older viewers may be weighted more heavily than tune outs from younger viewers, as they are more indicative of scene changes.

In step 635, the system may determine distributions for the different factors to be considered for the rule. The distributions may vary in type and/or calculation based on the factor and its applicable rule. The raw numbers of events over time collected in step 630 may have limited use without context, as an increase in numbers has less meaning if there are more overall users in the data. A distribution may provide a more usable set of data for a computing system. Further, performing the distributions in advance may have the advantage of allowing the distributions to be calculated separately from later distributions and may allow a distribution graph to only need to be created once (with different portions used for different scene changes).

One exemplary distribution may be a derivative distribution. For example, in FIG. 3, tune out events spike sharply at point 315. The system may calculate a derivative of the graph 305 to produce a slope graph of the rate at which users are tuning in or out of a content item at different points in time. This graph may further be smoothed to account for variances in the data. For example, a window may be selected for determining the slope values. A larger window (for example, considering the slope every two seconds) may present a more consistent graph than a smaller window (for example, considering the slope every .01 seconds), as the smaller window will reflect random variance in the data.

An alternative distribution may be a normal (e.g., Gaussian) distribution or any other type of distribution. By calculating the standard deviation of the number of events in a point of time versus the average number of events for any point in time in the content item, the system may determine the statistical significance of the number of events at that point in time. For example, a content item may have a significant variance regarding the number of volume changes that occur per a two second period. By determining the standard deviation of the number of volume changes in each period, the resultant graph may represent instances where the number of volume changes exceeded the random variance at a statistically significant level in order to determine a correlation to the location of an advertisement.

Another alternative distribution may be a ratio of the instance of a factor in a given window of time compared to the average instance of the factor for the window of time throughout the content item. For example, the system may calculate the ratio of the instance of pauses for every 2 second window of the content item versus the average number of pauses for an average 2 second window of the content item. This may provide a more consistent data set upon which the system may evaluate various rules, as it may account for changes in the number of users or noise in the collected user interaction data.

Any other statistical methods useful for analyzing data may be applied. For example, a ratio may be applied to a derivative distribution in order to create a consistent comparison of the change in the ratio per unit time rather than the change in the total number per unit time. The derivative distribution may be compared against a statistical distribution in order to determine the statistical significance of each rate of change represented by the derivative graph. Thus, the methods described herein may also be implemented using a combination of distributions and/or other types of distributions.

In step 640, the system may determine scene changes for a content item. A system may analyze the content item in order to determine where scene changes appear to have occurred. For example, the system may analyze the visual content of a content item to determine one or more scenes, as described in FIG. 3. The transition between each scene may be considered a scene change. In some instances, the system may receive data indicating when scene changes occur when it receives the content item, and/or from a separate system. Using scene changes may have the advantage of reducing the number of data points for the system to consider (in some instances, the system may only apply the rules at scene changes), and may focus the system on points that are more likely to be the beginning or end of advertisements. For example, a sitcom scene of two characters in a bedroom may be distinguished from a subsequent scene of two characters at the grocery store. While the system may not, at this stage, be able to determine if the grocery store scene is an advertisement, by determining that the scene has changed, the system may focus its resources on analyzing the transition between the two scenes to determine if the grocery store scene is an advertisement. This may avoid wasting processing power analyzing interactions in the middle of a scene, where the beginning of an advertisement may be unlikely. Once the scene changes have been determined, the system may proceed with analyzing the first scene change in step 645.

In step 645, the system may determine a tune out value for a scene change. The system may analyze the number of users that are tuned in to a content item at one period in time versus the number tuned in at another period of time. When users begin to tune out of the content item (whether they tune out to watch other content, or cease watching content altogether), this may indicate that the content item may be transitioning to advertisements. If users begin to tune back in to program, this may indicate that the content item may be transitioning out of the advertisements and back into the show. The system may determine a value to represent the tune in or tune out events for the scene change.

In some embodiments, the system may use a derivative distribution to determine the tune out value for the scene change. A derivative distribution may indicate the rate at which users are tuning out of the broadcast during the scene change. A value may be assigned based on the slope of the line using a rule associated with the content item. For example, the value may be 1 for every 2.5% of users who tuned out per second. A negative value may correspond to a negative slope. A positive value may thus correspond to tune outs, and a negative value may correspond to tune ins. A time window may be specified for the scene change. For example, the system may analyze a three second window after the scene changes. The system may then determine the value based on an average of the values corresponding to each second of the three second window.

In step 650, the system may determine a fast forward value for the scene change. The system may analyze the number of users that are fast forwarding at the approximate time of the scene change. When users begin fast forwarding, this may indicate that the content item may be transitioning to advertisements. When users cease fast forwarding, this may indicate that the content item may be transitioning out of the advertisements and back to the show. The system may determine a value to represent the fast forward events for the scene change.

In some embodiments, the system may use a derivative distribution to determine the tune out value for the scene change. A derivative distribution may indicate the rate at which users are tuning out of the broadcast during the scene change. A value may be assigned based on the slope of the line using a rule associated with the content item. For example, the value may be 1 for every 2.5% of users who begin fast forwarding per second. A negative value may correspond to a negative slope. A positive value may thus correspond to beginning fast forwarding, and a negative value may correspond to ceasing fast forwarding. A time window may be specified for the scene change. For example, the system may analyze a three second window after the scene changes. The system may then determine the value based on an average of the values corresponding to each second of the three second window.

In step 655, the system may determine a pause value for the scene change. The system may analyze the number of users who are pausing the content item in order to determine whether the scene change is transitioning to an advertisement. The more that individuals pause the content item, the more it may be indicative that advertisements have begun.

In some embodiments, the system may use a statistical distribution to determine the pause value for the scene change. The system may determine the deviation between the pause events that occur in a window after a scene change (such as three to five seconds after the scene change). A positive deviation may indicate that an advertisement has begun. A negative deviation may indicate that an advertisement has ended. The system may then assign a value based on the deviation and a rule associated with the content item. For example, the system may assign the average deviation as the value.

In step 660, the system may determine a volume change value for the scene change. The system may analyze the number of users that are decreasing or increasing their volume at the scene change. When users decrease their volume, this may indicate that the content item may be transitioning to advertisements. When users increase their volume, this may indicate that the content item may be transitioning out of the advertisements and back to the show. The system may determine a value to represent the volume changes for the scene change.

In some embodiments, the system may use a statistical distribution to determine the volume change value for the scene change. The system may determine the deviation between the volume changes in a window after a scene change (such as three to five seconds after the scene change). The deviation for volume increases may then be subtracted from the deviation for volume decreases. A resultant positive deviation may indicate that a significant number of volume decreases may have occurred, and that the content item may be transitioning to an advertisement. A resultant negative deviation may indicate that a significant number of volume increases may have occurred, and that the content item may be transitioning to out of an advertisement and back to the show. The system may then assign a value based on the deviation and a rule associated with the content item. For example, the system may assign the resultant deviation as the value.

In step 665, the system may determine if other factors should be considered. For example, the system may determine values based on logos, game clocks, or other such information. For example, the system may determine the location of an advertisement based on an ambient noise level recorded by the STB, as users may only talk to each other during commercial breaks. If no other factors should be considered, the system may proceed to determining the total value at step 675. If another factor should be considered, the system may determine the value for the other factor in step 670. For example, the system may assign a value of 1 when a logo appears three seconds after a scene change, and a value of 0 when it does not. In another example, the system may assign a value of 1 when a game clock appears three seconds after a scene change, and a value of 0 when it does not. After determining the value for the factor, the system may return to step 665 to determine if further factors should be considered.

In step 675, the system may determine a total value for the scene change. The system may use the values determined in steps 645, 650, 655, 660, and/or step 670 to determine the total value based on a rule. For example, the system may apply the rule corresponding to a sitcom as depicted in FIG. 5. The system may apply a weight of 1 to a fast forward value, a weight of .8 to a tune out value, a weight of -5 to a logo value, a weight of 0 to a clock value, a weight of 10 to a volume increase, and a weight of 5 to a pause value. The system may then add the weighted values to determine the value for the content item. Any mathematical algorithm may be used to combine the different values in order to determine a total value. For example, an algorithm may exponentially weight more statistically significant values over less statistically significant values.

In step 680, the system may determine whether a threshold value has been met. The system may establish three possibilities based on the threshold value: the scene change may be the beginning of advertisements, may be the end of advertisements, or may not represent either the beginning or end of advertisements (e.g., is neutral). The system may determine which possibility to choose based on comparing the total value versus a threshold. If the total value exceeds the threshold, the scene change may be flagged as the beginning of advertisements in step 685. If the total value is below the negative of the threshold, the scene change may be flagged as the end of a section of advertisements in step 690. If the total value falls between the positive and negative of the threshold, then the scene change may be flagged as neutral in step 693. For example, the system may determine the total value for a sitcom is 65. Using the exemplary rule depicted in FIG. 5, the system may determine that this exceeds the positive of the threshold and flag the scene change as the beginning of an advertisement. In another example, the system may determine the total value of a drama is -57. Using the exemplary rule depicted in FIG. 5, the system may determine that this falls below the negative of the threshold and flag the scene change as the end of advertisements. In another example, the system may determine that the total value for an action program is 34. Using the exemplary rule depicted in FIG. 5, the system may determine that the total value is between the positive and negative of the threshold and flag the scene change as neutral. After flagging the scene change, the system may proceed to determining if there are further scene changes in step 695.

In step 695, the system may determine if there are further scene changes to be considered for the content item. In some instances, the system may proceed through every scene change for a content item before proceeding to step 698. In other instances, only a subset of scene changes may be considered in an iteration of the method. For example, multiple systems may each consider one subset of scene changes for a single content item. If there are further scene changes to be considered, the system may proceed to step 645 for the next scene change. If there are no further scene changes to be considered, the system may proceed to determining the advertisement locations in step 698.

In step 698, the system may determine advertisement locations based on the flagged scene changes. The system may determine a timeline of the content item and identify portions between scene changes flagged as the beginning and end of advertisements as advertisements, and other areas as the show. In some instances, post processing may be performed. If two scene changes in a row are flagged as a beginning/end, the system may choose to either ignore one, or choose the stronger of the two as the beginning/end. The system may also know that advertisements have a set duration, such as a 30 second interval, and discard flagged scene changes that do not fall according to that interval. For example, if a scene change at 30 seconds is flagged as the beginning of advertisements, and two scene changes are flagged as the end of advertisements at 90 and 100 seconds, the system may elect the scene change at 90 seconds because it falls on a 30 second interval from the beginning of the advertisements.

In some embodiments, an ad insertion platform, which may be implemented as a computing device 200, may predict advertisement opportunities for placing advertisements in linear or time shifted content based on the advertisement locations determined according to the systems and/or methods discussed herein. In some instances, the ad insertion platform may receive the advertisement locations from a separate system. For example, a system determining advertisement locations may transmit advertisement locations as data to the ad insertion platform. In other instances, a system for determining advertisement locations may be integrated into the ad insertion platform. Advertisement placement opportunities may correlate to the advertisement locations determined by the system.

In some embodiments, the ad insertion platform may replace one or more advertisements in a content item based on the advertisements locations for the content item. The ad insertion platform may identify advertisements for replacement based on received advertisement location data. For example, the ad insertion platform may determine that portions of a content item are indicated as being an advertisement in a timeline, such as may be generated in step 698 above. The ad insertion platform may then remove the advertisements at the advertisement locations and/or insert new advertisements. For example, the ad insertion platform may remove all advertisements at the advertisement locations, and insert directed advertisements in their stead. This may have the benefit of shortening video for on-demand streaming, while still presenting directed advertisements appropriate for the streaming platform.

In some instances, advertisements may be removed and/or inserted by the ad insertion platform at the advertisement locations based on further data. For example, the ad insertion platform may receive fast forward information (such as from the system discussed above) noting that viewers in a certain demographic frequently fast forwarded through an advertisement. The ad insertion platform may remove the frequently fast forwarded advertisement, and/or insert an alternative advertisement that may be better suited for the demographic. In another example, advertisements for a content item may originally be intended for an original demographic, but may be replaced by the ad insertion platform with advertisements for a younger demographic when the content item is streamed online if the younger demographic is more likely to stream online than the original demographic. In yet another example, a first advertisement targeted at a targeted demographic (such as kids) may be rarely skipped by the targeted demographic. A second advertisement targeted at the first demographic may be frequently skipped. The ad insertion platform may replace the second advertisement with the first advertisement in order to maximize the amount of advertisements that are viewed by the targeted demographic.

The methods and features recited herein may be implemented through any number of computer readable media that are able to store computer readable instructions. Examples of computer readable media that may be used include RAM, ROM, Electrically Erasable Programmable Read-Only Memory (EEPROM), flash memory or other memory technology, CD-ROM, DVD, other optical disk storage, magnetic cassettes, magnetic tape, magnetic storage, and the like.

Additionally or alternatively, in at least some embodiments, the methods and features recited herein may be implemented through one or more Integrated Circuits (ICs). An IC may be, for example, a microprocessor that accesses programming instructions or other data stored in a ROM. In some embodiments, a ROM may store program instructions that cause an IC to perform operations according to one or more of the methods described herein. In some embodiments, one or more of the methods described herein may be hardwired into an IC. For example, an IC may comprise an Application Specific Integrated Circuit (ASIC) having gates and/or other logic dedicated to the calculations and other operations described herein. In still other embodiments, an IC may perform some operations based on execution of programming instructions read from ROM or RAM, with other operations hardwired into gates or other logic. Further, an IC may be configured to output image data to a display buffer.

The various features described above are merely non-limiting examples and may be rearranged, combined, subdivided, omitted, and/or altered in any desired manner. For example, features of the servers may be subdivided among multiple processors and/or computing devices. The true scope of this patent should only be defined by the claims that follow.

## Claims

1. A method comprising:
receiving, by one or more computing devices, a content stream comprising at least two sequential content segments;
determining, based on visual content of the content stream, a plurality of scene changes of the content stream; aggregating, by the one or more computing devices and based on the plurality of scene changes, a plurality of user interactions from a plurality of users, wherein the user interactions are associated with presentation of the content stream;
determining, by the one or more computing devices and based on the plurality of user interactions, that a boundary between the at least two sequential content segments is an advertisement boundary; and
transmitting, by the one or more computing devices, information indicating the boundary to at least one ad insertion platform.

2. The method of claim 1, wherein the plurality of user interactions comprises a plurality of fast forward events, a plurality of tune-out events, or a plurality of volume change events.

3. The method of claim 1 or 2, further comprising:
determining, based on a genre of the content stream, a set of rules associated with the content stream;
determining, based on the set of rules, a threshold value; and
wherein the determining the boundary is based on whether the plurality of user interactions meets the threshold value.

4. The method of claim 3, further comprising:
receiving, by the one or more computing devices, a second content stream comprising at least two sequential content segments, wherein the genre of the content stream is the genre of the second content stream;
determining a second boundary between the at least two sequential content segments from the second content stream; and
wherein the determining the set of rules is based on analyzing a correlation between a plurality of additional user interactions associated with the second content stream and the second boundary.

5. The method of claims 1 or 2, wherein the determining the boundary further comprises:
determining, based on a set of rules associated with the content stream, a threshold value;
and
determining, based on the plurality of user interactions exceeding the threshold value, the boundary.

6. The method of any one of the preceding claims, wherein the determining the boundary comprises determining that the boundary is a beginning of an advertisement segment.

7. The method of any one of claims 1 or 2, further comprising:
determining, by the one or more computing devices and based on a set of rules associated with the content stream and the plurality of user interactions, a user interaction value;
determining, by the one or more computing devices and based on the set of rules associated with the content stream, a threshold value; and
wherein the determining the boundary between the at least two sequential content segments is based on the user interaction value meeting the threshold value.

8. The method of claim 7, wherein the determining the user interaction value is at least in part based on a first rate of change value of a first number of users who tune out of the content stream at a first time and a second rate of change value of a second number of users who tune in to the content stream at a second time.

9. The method of claim 8, wherein the determining the user interaction value is at least in part based on a third rate of change value of a third number of users who tune out of the content stream at the first time and a fourth rate of change value of a fourth number of users who tune in to the content stream at the second time.

10. The method of any one of claims 7-9, wherein the determining the user interaction value is at least in part based on a presence of a logo in the content stream.

11. The method of any one of claims 7-10, wherein the determining the boundary is based at least in part on comparing the threshold value and a rate of change of a tune out value for the content stream; or
wherein the determining the boundary is based at least in part on comparing the threshold value and a rate of change of a fast forward value for the content stream.

12. The method of any one of claims 7-11, wherein the determining the boundary is based at least in part on comparing the threshold value and a pause value for the content stream, wherein the pause value is based on a pause statistical distribution value associated with the content stream; or
wherein the determining the boundary is based at least in part on comparing the threshold value and a volume change value for the content stream, wherein the volume change value is based on a volume change statistical distribution value associated with the content stream.

13. The method of any one of the preceding claims, wherein the determining the boundary is based at least in part on a game clock corresponding to the content stream.

14. One or more computing devices comprising:
one or more processors; and
memory storing instructions that, when executed by the one or more processors, cause the one or more computing devices to perform the method recited in any of claims 1-13.

15. A system comprising:
one or more computing devices configured to perform the method recited in any of claims 1-13; and a server configured to send the content stream to the one or more computing devices.

## Patentansprüche

1. Verfahren, umfassend:
Empfangen, durch eine oder mehrere Rechnervorrichtungen, eines Inhaltsstroms, der mindestens zwei aufeinander folgende Inhaltsabschnitte umfasst;
Bestimmen, auf Basis sichtbaren Inhalts des Inhaltsstroms, einer Mehrzahl von Szenenwechseln des Inhaltsstroms;
Ansammeln, durch die eine oder die mehreren Rechnervorrichtungen und auf Basis der Mehrzahl von Szenenwechseln, einer Mehrzahl von Nutzerinteraktionen von einer Mehrzahl von Nutzern, wobei die Nutzerinteraktionen einer Vorführung des Inhaltsstroms zugeordnet sind;
Bestimmen, durch die eine oder die mehreren Rechnervorrichtungen und auf Basis der Mehrzahl von Nutzerinteraktionen, dass eine Grenze zwischen den mindestens zwei aufeinander folgenden Inhaltsabschnitten eine Werbegrenze ist; und
Übertragen, durch die eine oder die mehreren Rechnervorrichtungen, von Informationen, die die Grenze angeben, an mindestens eine Werbungseinfügungsplattform.

2. Verfahren gemäß Anspruch 1, wobei die Mehrzahl von Nutzerinteraktionen eine Mehrzahl von Fast-Forward-Ereignissen, eine Mehrzahl von Wegschaltereignissen oder eine Mehrzahl von Lautstärkeänderungsereignissen umfasst.

3. Verfahren gemäß Anspruch 1 oder 2, ferner umfassend:
Bestimmen, auf Basis eines Genres des Inhaltsstroms, eines Satzes von Regeln, der dem Inhaltsstrom zugeordnet ist;
Bestimmen eines Schwellenwerts auf Basis des Satzes von Regeln; und
wobei das Bestimmen der Grenze darauf basiert, ob die Mehrzahl von Nutzerinteraktionen den Schwellenwert erreicht.

4. Verfahren gemäß Anspruch 3, ferner umfassend:
Empfangen, durch die eine oder die mehreren Rechnervorrichtungen, eines zweiten Inhaltsstroms, der mindestens zwei aufeinander folgende Inhaltsabschnitte umfasst, wobei das Genre des Inhaltsstroms das Genre des zweiten Inhaltsstroms ist;
Bestimmen einer zweiten Grenze zwischen den mindestens zwei aufeinander folgenden Inhaltsabschnitten aus dem zweiten Inhaltsstrom; und
wobei das Bestimmen des Satzes von Regeln darauf basiert, dass eine Korrelation zwischen einer Mehrzahl zusätzlicher Nutzerinteraktionen, die dem zweiten Inhaltsstrom und der zweiten Grenze zugeordnet sind, analysiert wird.

5. Verfahren gemäß einem der Ansprüche 1 oder 2, wobei das Bestimmen der Grenze ferner umfasst:
Bestimmen eines Schwellenwerts auf Basis eines Satzes von Regeln, der dem Inhaltsstrom zugeordnet ist; und
Bestimmen der Grenze auf Basis der Mehrzahl von Nutzerinteraktionen, die den Schwellenwert überschreiten.

6. Verfahren gemäß einem der vorhergehenden Ansprüche, wobei das Bestimmen der Grenze ein Bestimmen dessen umfasst, dass die Grenze ein Beginn eines Werbeabschnitts ist.

7. Verfahren gemäß einem der Ansprüche 1 oder 2, ferner umfassend:
Bestimmen eines Nutzerinteraktionswerts durch die eine oder die mehreren Rechnervorrichtungen und auf Basis eines Satzes von Regeln, der dem Inhaltsstrom zugeordnet ist, und der Mehrzahl von Nutzerinteraktionen;
Bestimmen eines Schwellenwerts durch die eine oder die mehreren Rechnervorrichtungen und auf Basis eines Satzes von Regeln, der dem Inhaltsstrom zugeordnet ist; und
wobei das Bestimmen der Grenze zwischen den mindestens zwei aufeinander folgenden Inhaltsabschnitten darauf basiert, dass der Nutzerinteraktionswert den Schwellenwert erreicht.

8. Verfahren gemäß Anspruch 7, wobei das Bestimmen des Nutzerinteraktionswerts mindestens teilweise auf einem ersten Änderungsratenwert einer ersten Anzahl von Nutzern basiert, die zu einer ersten Zeit von dem Inhaltsstrom wegschalten, und einem zweiten Änderungsratenwert einer zweiten Anzahl von Nutzern basiert, die zu einer zweiten Zeit zu dem Inhaltsstrom hin schalten.

9. Verfahren gemäß Anspruch 8, wobei das Bestimmen des Nutzerinteraktionswerts mindestens teilweise auf einem dritten Änderungsratenwert einer dritten Anzahl von Nutzern basiert, die zu der ersten Zeit von dem Inhaltsstrom wegschalten, und einem vierten Änderungsratenwert einer vierten Anzahl von Nutzern basiert, die zu der zweiten Zeit zu dem Inhaltsstrom hin schalten.

10. Verfahren gemäß einem der Ansprüche 7 bis 9, wobei das Bestimmen des Nutzerinteraktionswerts mindestens teilweise auf einer Anwesenheit eines Logos im Inhaltsstrom basiert.

11. Verfahren gemäß einem der Ansprüche 7 bis 10, wobei das Bestimmen der Grenze mindestens teilweise auf einem Vergleichen des Schwellenwerts mit einer Änderungsrate eines Wegschaltwerts für den Inhaltsstrom basiert; oder
wobei das Bestimmen der Grenze mindestens teilweise auf einem Vergleichen des Schwellenwerts mit einer Änderungsrate eines Fast-Forward-Werts für den Inhaltsstrom basiert.

12. Verfahren gemäß einem der Ansprüche 7 bis 11, wobei das Bestimmen der Grenze mindestens teilweise auf einem Vergleichen des Schwellenwerts mit einem Pausenwert für den Inhaltsstrom basiert, wobei der Pausenwert auf einem dem Inhaltsstrom zugeordneten statistischen Verteilungswert von Pausen basiert; oder
wobei das Bestimmen der Grenze mindestens teilweise auf einem Vergleichen des Schwellenwerts mit einem Lautstärkeänderungswert für den Inhaltsstrom basiert, wobei der Lautstärkeänderungswert auf einem dem Inhaltsstrom zugeordneten statistischen Verteilungswert der Lautstärkeänderung basiert.

13. Verfahren gemäß einem der vorhergehenden Ansprüche, wobei das Bestimmen der Grenze mindestens teilweise auf einer dem Inhaltsstrom zugeordneten Spiel-Zeitdauer-Uhr basiert.

14. Eine oder mehrere Rechnervorrichtungen, umfassend:
einen oder mehrere Prozessoren; und
Speicherablagebefehle, die bei ihrer Ausführung durch den einen oder die mehreren Prozessoren die eine oder die mehreren Rechnervorrichtungen veranlassen, das Verfahren gemäß einem der Ansprüche 1 bis 13 auszuführen.

15. System, umfassend:
eine oder mehrere Rechnervorrichtungen, die dazu konfiguriert sind, das Verfahren gemäß einem der Ansprüche 1 bis 13 auszuführen; und einen Server, der dazu konfiguriert ist, den Inhaltsstrom an die eine oder die mehreren Rechnervorrichtungen zu senden.

## Revendications

1. Procédé comprenant :
la réception, par un ou plusieurs dispositif (s) informatique(s), d'un flux de contenu qui comprend au moins deux segments de contenu séquentiels ;
la détermination, sur la base du contenu visuel du flux de contenu, d'une pluralité de changements de scène du flux de contenu ;
l'agrégation, par les un ou plusieurs dispositifs informatiques et sur la base de la pluralité de changements de scène, d'une pluralité d'interactions d'utilisateur en provenance d'une pluralité d'utilisateurs, dans lequel les interactions d'utilisateur sont associées à une présentation du flux de contenu ;
la détermination, par les un ou plusieurs dispositifs informatiques et sur la base de la pluralité d'interactions d'utilisateur, du fait qu'une frontière entre les au moins deux segments de contenu séquentiels est une frontière de publicité ; et
la transmission, par les un ou plusieurs dispositifs informatiques, d'une information qui indique la frontière à au moins une plate-forme d'insertion de publicité.

2. Procédé selon la revendication 1, dans lequel la pluralité d'interactions d'utilisateur comprend une pluralité d'événements en avance rapide, une pluralité d'événements de déconnexion ou une pluralité d'événements de modification de volume.

3. Procédé selon la revendication 1 ou 2, comprenant en outre :
la détermination, sur la base d'un genre du flux de contenu, d'un jeu de règles qui sont associées au flux de contenu ;
la détermination, sur la base du jeu de règles, d'une valeur de seuil ; et dans lequel :
la détermination de la frontière est basée sur la satisfaction ou la non satisfaction de la valeur de seuil par la pluralité d'interactions d'utilisateur.

4. Procédé selon la revendication 3, comprenant en outre :
la réception, par les un ou plusieurs dispositifs informatiques, d'un second flux de contenu qui comprend au moins deux segments de contenu séquentiels, dans lequel le genre du flux de contenu est le genre du second flux de contenu ;
la détermination d'une seconde frontière entre les au moins deux segments de contenu séquentiels à partir du second flux de contenu ; et dans lequel :
la détermination du jeu de règles est basée sur l'analyse d'une corrélation entre une pluralité d'interactions d'utilisateur additionnelles qui sont associées au second flux de contenu et la seconde frontière.

5. Procédé selon la revendication 1 ou 2, dans lequel la détermination de la frontière comprend en outre :
la détermination, sur la base d'un jeu de règles qui sont associées au flux de contenu, d'une valeur de seuil ; et
la détermination, sur la base de la pluralité d'interactions d'utilisateur excédant la valeur de seuil, de la frontière.

6. Procédé selon l'une quelconque des revendications précédentes, dans lequel la détermination de la frontière comprend la détermination du fait que la frontière est un début d'un segment de publicité.

7. Procédé selon l'une quelconque des revendications 1 ou 2, comprenant en outre :
la détermination, par les un ou plusieurs dispositifs informatiques et sur la base d'un jeu de règles qui sont associées au flux de contenu et de la pluralité d'interactions d'utilisateur, d'une valeur d'interaction d'utilisateur ;
la détermination, par les un ou plusieurs dispositifs informatiques et sur la base du jeu de règles qui sont associées au flux de contenu, d'une valeur de seuil ; et dans lequel :
la détermination de la frontière entre les au moins deux segments de contenu séquentiels est basée sur la satisfaction de la valeur de seuil par la valeur d'interaction d'utilisateur.

8. Procédé selon la revendication 7, dans lequel la détermination de la valeur d'interaction d'utilisateur est au moins en partie basée sur une première valeur de rythme de changement d'un premier nombre d'utilisateurs qui se déconnectent du flux de contenu à un premier instant et sur une seconde valeur de rythme de changement d'un deuxième nombre d'utilisateurs qui se connectent sur le flux de contenu à un second instant.

9. Procédé selon la revendication 8, dans lequel la détermination de la valeur d'interaction d'utilisateur est au moins en partie basée sur une troisième valeur de rythme de changement d'un troisième nombre d'utilisateurs qui se déconnectent du flux de contenu à un premier instant et sur une quatrième valeur de rythme de changement d'un quatrième nombre d'utilisateurs qui se connectent sur le flux de contenu à un second instant.

10. Procédé selon l'une quelconque des revendications 7 à 9, dans lequel la détermination de la valeur d'interaction d'utilisateur est au moins en partie basée sur une présence d'un logo dans le flux de contenu.

11. Procédé selon l'une quelconque des revendications 7 à 10, dans lequel :
la détermination de la frontière est basée au moins en partie sur la comparaison de la valeur de seuil et d'un rythme de changement d'une valeur de déconnexion pour le flux de contenu ; ou dans lequel :
la détermination de la frontière est basée au moins en partie sur la comparaison de la valeur de seuil et d'un rythme de changement d'une valeur en avance rapide pour le flux de contenu.

12. Procédé selon l'une quelconque des revendications 7 à 11, dans lequel :
la détermination de la frontière est basée au moins en partie sur la comparaison de la valeur de seuil et d'une valeur de pause pour le flux de contenu, dans lequel la valeur de pause est basée sur une valeur de distribution statistique de pauses qui est associée au flux de contenu ; ou dans lequel :
la détermination de la frontière est basée au moins en partie sur la comparaison de la valeur de seuil et d'une valeur de modification de volume pour le flux de contenu, dans lequel la valeur de modification de volume est basée sur une valeur de distribution statistique de modifications de volume qui est associée au flux de contenu.

13. Procédé selon l'une quelconque des revendications précédentes, dans lequel la détermination de la frontière est basée au moins en partie sur une horloge de jeu qui correspond au flux de contenu.

14. Dispositif informatique ou dispositifs informatiques comprenant :
un ou plusieurs processeur(s) ; et
une mémoire qui stocke des instructions qui, lorsqu'elles sont exécutées par les un ou plusieurs processeurs, forcent les un ou plusieurs dispositifs informatiques à réaliser le procédé tel que revendiqué selon l'une quelconque des revendications 1 à 13.

15. Système comprenant :
un ou plusieurs dispositif(s) informatiques(s) qui est/sont configuré(s) de manière à ce qu'il(s) réalise(nt) le procédé tel que revendiqué selon l'une quelconque des revendications 1 à 13 ; et un serveur qui est configuré de manière à ce qu'il envoie le flux de contenu aux un ou plusieurs dispositifs informatiques.
